# EUROPEAN PATENT SPECIFICATION

(11) **EP 0 778 560 B1**
(45) Date of publication and mention of the grant of the patent: **14.07.2004**
(21) Application number: 96850181.7
(22) Date of filing: 30.10.1996
(51) Int. Cl.: G06T 15/70, G06K 9/00, G10L 13/00

(54) **Device and method at speech synthesis**
Vorrichtung und Verfahren zur Sprachsynthese
Dispositif et procédé de synthèse de la parole

(30) Priority: 06.12.1995 SE 9504367
(43) Date of publication of application: 11.06.1997
(73) Proprietor: TELIA AB, 123 86 Farsta (SE)
(72) Inventor: Lyberg, Bertil, 610 70 Vagnhärad (SE)
(74) Representative: Hopfgarten, Nils

(56) References cited:
- US-A- 5 111 409
- US-A- 5 482 048
- SHIGEO MORISHIMA ET AL: "AN INTELLIGENT FACIAL IMAGE CODING DRIVEN BY SPEECH AND PHONEME" , INTERNATIONAL CONFERENCE ON ACOUSTICS, SPEECH, AND SIGNAL PROCESSING (ICASSP), GLASGOW, MAY 23 - 26, 1989, VOL. 3, PAGE(S) 1795 - 1798 , INSTITUTE OF ELECTRICAL AND ELECTRONICS ENGINEERS (IEEE) XP000089223 * the whole document *
- DATABASE WPI Section PQ, Week 9603 Derwent Publications Ltd., London, GB; Class P86, AN 96-027541 XP002070414 -& JP 07 302 351 A (CANON KK)

## Description

### TECHNICAL FIELD

The present invention relates to speech synthesis, especially speech-to-speech translation at videotransmission of a speaking person. The intention with the invention is to present a device which adapts the facial movements to a speech into which the speech has been translated.

### PRIOR ART

In patent document SE-A-9301597 is described how lip movements can be adapted to a translated speech at translation of a speech into a second language.

### DESCRIPTION OF THE INVENTION

### TECHNICAL PROBLEM

At translation of a speech from one language into another, it is important that the rendering of facial expressions is in accordance with the spoken word. In this connection it has previously been indicated that the lip movements shall be adapted to the translated speech. Such an adaption is in itself a step on the way, but lip movements and face movements as to the rest do not correspond in this case, which gives a listener wrong and confusing signals.
Consequently there is a wish to get possibility to adapt the movement pattern of the face of a speaker at translation from one language into another.

### THE SOLUTION

The present invention relates to a device at speech synthesis. Polyphones, preferably half-syllables, are stored in a storage unit together with facial expressions belonging to the polyphones. The polyphones can be selected and combined into words and sentences. At the creation of the words and sentences the corresponding facial expression is composed and is applied to a picture of the face, which picture of the face is given a movement pattern which is well in accordance with the movements in a real face. To make it possible to store the facial expressions, a number of points on the face of a subject of the experiment who performs the speech, which is utilized for the polyphone bank, are registered. Polyphones for a number of different languages are recorded and registered together with corresponding facial expressions.

The face movement pattern of the subject of the experiment is stored in a data bank and is utilized for the modelling of the movement pattern in the second language. The invention in this way gives a set of facial expressions which are associated with the different polyphones. These facial expressions are after that combined to, to one or more of the combined polyphones corresponding words and sentences. In this way a modelled facial expression is achieved, which is applied to a depiction of the face of a speaking person.

At the modelling of the face is taken into consideration that different polyphones are given different facial expressions, since regard is paid to coming vowel- and consonant combinations. The face movements are further applied to a modell which is applied to a real face. The model can be two-or three dimensional. At the utilization of a three dimensional model, a model head is preferably utilized. The registered points in the face is at that registered in three dimensions. At the creation of the face, a reproduction of the real face is applied to the model, which gives a lifelike picture of the real face and its movement pattern.

### ADVANTAGES

The invention gives a possibility to adapt the movement pattern of a face to a second language in spite of that the person speaks a language which does not correspond to the received language. That the facial expression corresponds to the received language increases the understanding of the speech, since confusing and misleading signals in the facial expressions are eliminated or essentially removed.

### DESCRIPTION OF FIGURES

Figure 1 shows a polyphone and a number of to the polyphone related points in a face.
Figure 2 shows the corresponding as in Figure 1, where the polyphone has been segmented.
Figure 3 shows a measuring equipment, M, equipped with laser, L, where a light signal, A, is transmitted, and a reflected signal, B, is received for measuring of points, 1-10, in a face.
Figure 4 shows a flow chart over the invention.
   x) Read speech.
   y) Record the movements of the measuring points in the face.
   z) Store in database where the words are divided into half-words with belonging face movements.
   a) Translated speech.
   b) Find current half-words in database.
   c) Select movement patters in the face to corresponding half-word.
   d) Segment half-word and corresponding face movements.
   e) Adapt segment and movements to the wanted speech.
   f) Create a model of face movements.
   g) Paste the real face over the model.
   h) Produce sound and picture synchronized.

### DETAILED DESCRIPTION

In the following the invention is described on the basis of the figures and the terms therein.

The present invention relates to a device and method at speech synthesis. A speech is registered and polyphones are stored. In connection with registration of the polyphones, also the movement pattern of a face is registered. The registration of the movement pattern in the face is made by a number of measuring points in the face being registered at the same time as the polyphones are registered. In connection with translation of a persons speech from one language into another, the polyphones and current movements of the face are linked up to a movement model in the face. The face of the real person is after that pasted over the model, at which one to the language corresponding movement pattern is obtained. The invention consequently gives the impression that the person really speaks the language in question.

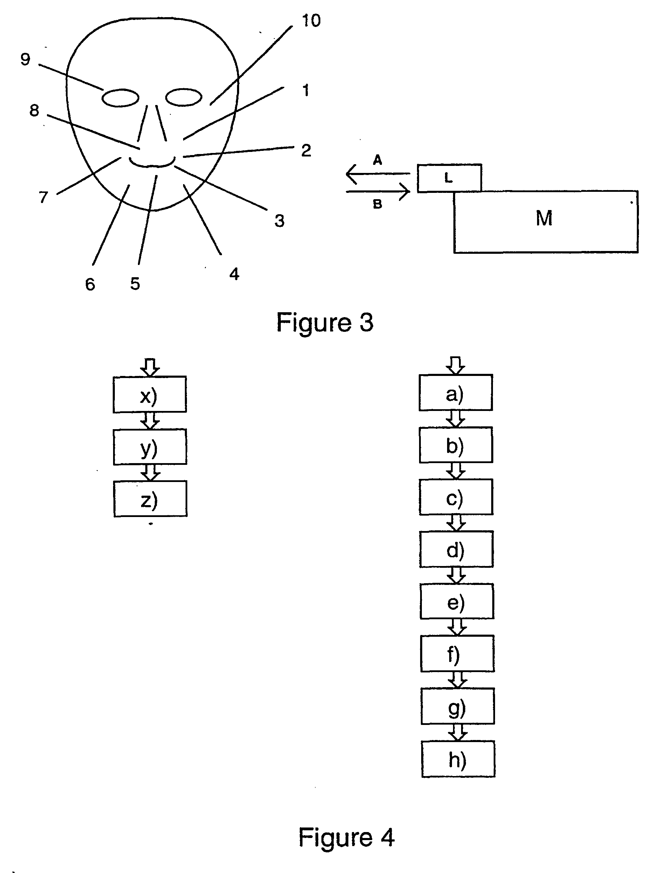

In connection with recording of polyphones, preferably half-syllables, movement patterns in different parts of a face is registered. The polyphones consist of half-syllables such as spru, spri, kro etc. At recording of the polyphones, devices are arranged for simultaneous registration of a number of measuring points in the face of an object of the experiment. The measuring points for instance consist of the in Figure 3 indicated points 1-10.

For each measuring point in the face are arranged reflectors or the like. Laser beams are transmitted from a laser transmitter, L, which is connected to a measuring equipment, M. The measuring equipment, M, registers the movement pattern in respective measuring points during performance of a natural speech. The speech is associated to the movement pattern in repective measuring point in the face. The number of measuring points in the face depends on to which extent the movement pattern in the face shall be registered. In certain cases it is sufficient to register only the movement pattern around the mouth and the section of the chin. In other connections are aimed at more complete patterns of movement in the face, where one wants to register cheek movements, eye reactions, movements round and on parts of the nose. The recorded words are divided into polyphones, half-syllables. The polyphones are linked up to corresponding patterns of movement in the different parts of the face. Storing is after that made of the polyphones and to the polyphones belonging movement patterns in the face. The storing is made in a database where direct linking between the polyphones and the registered points in the face has been made. A bank with the in one or more languages existing polyphones is in this way obtained. The movements of the face of a person is to some extent depending on which language that is spoken. For this reason the polyphones and the face movements are preferably recorded for each language.

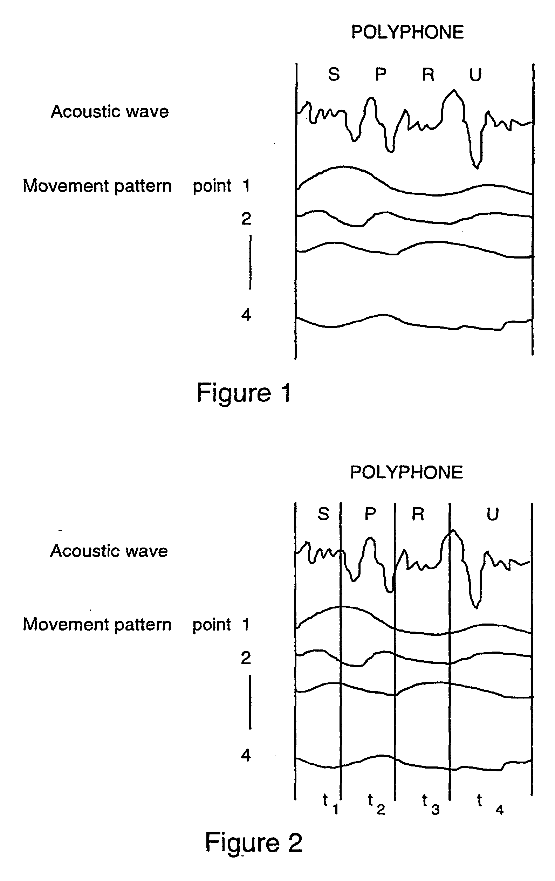

Each polyphone is after that segmented according to Figure 2. The segmentation of the polyphones is also transferred to the movement patterns in the face. In this way the representation of the pronounciation of single letters can be transferred to corresponding movement pattern in the different parts of the face.

An application of the invention is for instance video-telephony between parties who speak different languages. At such an application there are equipments in, or connectable to, the telecommmunication network, which register and analyze the speech of the parties. The speech is recognized and is translated into the language of the counterparty. In connection with the translation to the other language, the sentences which shall be pronounced are produced. The sentences are divided down into polyphones which are fetched from the data base for the language in question. Depending on which words that shall be pronounced is after that possibly an extenstion or a shortening of the pronounciation time made of the single sounds, the phonemes, in the polyphone. In connection with that the polyphone is taken out and adjusted, also the movement pattern in the different parts of the face is produced. In connection with that speech synthesis is made, the corresponding movement pattern is also applied to a model of a face. The model consist of a reproduction of face which indicates the fundamental features at the utilization of the language in question. At production of the speech, the face of the real person is after that pasted over the model, and one for the language characteristic pattern of movements is achieved.

With reference to Figure 4, the invention includes a first step where a person reads in a speech. During the reading a number of measuring points in the face are registered. The measuring points are preferably registered by laser signals which are directed towards the different measuring points in the face. The measuring points in question are marked with points which reflect the laser signal. The recorded speech and the red measuring results in the face are after that registered and stored in a database. In the database the recorded words are arranged in half-syllables to which half-syllables corresponding movement patterns in the face are related to.

In a second step where a person speaks a language which is translated into a second language, the current half-syllables are, after the translation, seeked out in the database. From the database is after that corresponding movement pattern in the face selected. A segmentation of half-syllables and corresponding movement pattern in the face is after that performed. An adaption of the segments is after that made with regard to the words that shall be produced. For instance shall the segments be extended or shortened in time.

Corresponding change is also introduced for corresponding segments in the face movements. When segmentation and adaption has been performed, a model of the face movements is created on a model head. The task of the model head is only to indicate which parts of the face that are changed during the execution of the speech, and is essentially lacking characteristic features of a specific person. In order to create a lifelike reproduction, the picture of the real person is after that utilized. This reproduction can be stored since before, or be created of the picture which is transferred of the speaker at recording of the first speech. The picture of the real speaker is after that pasted/superimposed on the model head. After that, sound and picture is produced together and transferred to a receiver. The produced reproduction with belonging speech will at that be interpreted as if the speaker in a natural manner speaks the language which the receiver receives.

In what has been described above, video telephony has been used as example, but the invention is applicable to all situations where a person shall play the part of speaking a different language from which he/she originally has spoken. The application consequently can be utilized at dubbing of films where a realistic behaviour is aimed at.

The invention is also applicable for registration of the total movement pattern of a person. In such a connection the measuring points are applied to a number of measuring points over the whole body of a person. The measuring points are, as has been described above, stored for linking to a translation of a given speech where the movement pattern first is built up on a model, whereupon the picture of the real person is pasted/superimposed.

In another embodiment the invention can be utilized for application of movement patterns on animated films for achieving lifelike movements of for instance drawn and data animated figures. In a further embodiment the measuring points, 1-10 in the face, are registered in a three-dimensional way. The stored information is after that utilized to create a three-dimensional model of the movement pattern on a model head. To transfer the obtained movement pattern on a person's head, a reproduction of the person's head is applied to the model by pasting. The pasting implies that the face of the person is made by that a three-dimensional picture of the person's face is produced and superimposed on the model head, at which the person in question gets a movement pattern which corresponds to the movement pattern of the language.

The invention is not restricted to what is described above, but may be subject to modifications within the scope of the invention as defined in the claims.

## Claims

1. Device for speech synthesis, where speech spoken by a person in a first language is translated into a second language, where polyphones and their parts stored in a storage unit are selected and combined to words and sentences,
**characterized in that** facial expressions of the speaker corresponding to the polyphones are registered at the same time as the polyphones and are also stored in the storage unit, that at the creation of the words and sentences stored facial expressions corresponding to polyphones in the second language are combined to modelled facial expressions and applied to the reproduction of the face of the speaker thereby giving the face a movement pattern which well corresponds to the movement pattern of a real face.

2. Device according to patent claim 1,
**characterized in that** a number of points in the real face are registered at the same time as the polyphones are registered.

3. Device according to any of the previous patent claims,
**characterized in that** at the registration of the facial expressions, a multiple of measurement points in real faces are registered together with the polyphones.

4. Device according to any of the previous patent claims,
**characterized in that** the registration of the picture points in the real face is arranged to be made three-dimensionally.

5. Device according to any of the previous patent claims
**characterized in that** the movement pattern of the face is arranged to be transferred to a three-dimensional model of the face.

6. Device according to patent claim 5,
**characterized in that** the tree-dimensional model of the face consists of a model head.

7. Device according to patent claim 6,
**characterized in that** the real face is stored together with/applied to the model head, at which a lifelike model of the real face is obtained.

8. Device according to any of the previous patent claims,
**characterized in that** the real face with to the polyphones belonging facial expressions can be reproduced in 2 or 3 dimensions.

9. Device according to any of the previous patent claims,
**characterized in that** the combining of polyphones and belonging movement pattern in the face can be utilized at video communication where the person speaks a first language, and said first language is translated into a second language, which second language is reproduced at a receiver which is given the impression that the person really speaks the second language.

10. Device according to any of the previous patent claims,
**characterized in that** the reproduction of facial expressions can be transferred to moving pictures at translation of speech.

11. Device according to patent claim 10,
**characterized in that** the moving pictures relate to animals, people or drawn figures.

12. Device according to any of the previous patent claims,
**characterized in that** the facial expressions with belonging polyphones can be utilized at picture animation, for instance at production of animated films.

13. Device according to patent claim 1,
**characterized in that** parts of the polyphones are stored together with corresponding movement pattern in the face.

14. Device according to any of the previous patent claims,
**characterized in that** at the creation of words and sentences the parts of the polyphones can be adapted to the created words and sentences, at which corresponding moving parts in the face are modified to corresponding extent.

15. Device according to patent claim 14,
**characterized in that** the movement pattern in each registered part of the face is modified with regard to the modification of the parts of the polyphones.

16. Method of speech synthesis, where speech spoken by a person in a first language is translated into as second language, where polyphones and their parts stored in a storage unit are selected and combined to words and sentences,
**characterized in that** facial expressions of the speaker corresponding to the polyphones are registered at the same time as the polyphones and are also stored in the storage unit, that at the creation of the words and sentences stored facial expressions corresponding to polyphones in the second language are combined to modelled facial expressions and applied to the reproduction of the face of the speaker thereby giving the face a movement pattern which well corresponds to the movement pattern of a real face.

17. Method according to patent claim 16,
**characterized in that** a number of points in a real face are registered together with the polyphones.

18. Method according to patent claim 16, or 17,
**characterized in that** at registration of the facial expressions, a multiple of measuring points are registered in the real face, together with the polyphones, and at combination of the polyphones the corresponding facial expressions are utilized for the creation of the model.

## Patentansprüche

1. Einrichtung zur Sprachsynthese, wobei von einer Person in einer ersten Sprache gesprochene Sprache in eine zweite Sprache übersetzt wird, wobei Polyphone und ihre Teile, die in einer Speicherungseinheit gespeichert sind, ausgewählt und zu Wörtern und Sätzen kombiniert werden, **dadurch gekennzeichnet, daß** den Polyphonen entsprechende Gesichtsausdrücke des Sprechers gleichzeitig mit den Polyphonen aufgezeichnet und ebenfalls in der Speicherungseinheit gespeichert werden, daß bei der Erzeugung der Wörter und Sätze Polyphonen in der zweiten Sprache entsprechende gespeicherte Gesichtsausdrücke zu modellierten Gesichtsausdrücken kombiniert und auf die Reproduktion des Gesichts des Sprechers angewandt werden, wodurch das Gesicht ein Bewegungsmuster erthält, das dem Bewegungsmuster eines realen Gesichts gut entspricht.

2. Einrichtung nach Anspruch 1, **dadurch gekennzeichnet, daß** eine Anzahl von Punkten im realen Gesicht zur gleichen Zeit aufgezeichnet wird, wie die Polyphone aufgezeichnet werden.

3. Einrichtung nach einem der vorhergehenden Ansprüche, **dadurch gekennzeichnet, daß** bei der Aufzeichnung der Gesichtsausdrücke mehrere Meßpunkte in realen Gesichtern zusammen mit den Polyphonen aufgezeichnet werden.

4. Einrichtung nach einem der vorhergehenden Ansprüche, **dadurch gekennzeichnet, daß** die Aufzeichnung der Bildpunkte im realen Gesicht so ausgelegt ist, daß sie dreidimensional gemacht wird.

5. Einrichtung nach einem der vorhergehenden Ansprüche, **dadurch gekennzeichnet, daß** das Bewegungsmuster des Gesichts so ausgelegt ist, daß es auf ein dreidimensionales Modell des Gesichts übertragen wird.

6. Einrichtung nach Anspruch 5, **dadurch gekennzeichnet, daß** das dreidimensionale Modell des Gesichts aus einem Modellkopf besteht.

7. Einrichtung nach Anspruch 6, **dadurch gekennzeichnet, daß** das reale Gesicht zusammen mit dem Modellkopf, bei dem ein lebensechtes Modell des realen Gesichts erhalten wird, gespeichert/auf diesen angewendet wird.

8. Einrichtung nach einem der vorhergehenden Ansprüche, **dadurch gekennzeichnet, daß** das reale Gesicht mit zu den Polyphonen gehörenden Gesichtsausdrücken in 2 oder 3 Dimensionen reproduziert werden kann.

9. Einrichtung nach einem der vorhergehenden Ansprüche, **dadurch gekennzeichnet, daß** das Kombinieren von Polyphonen und einem dazu gehörenden Bewegungsmuster im Gesicht bei Videokommunikation verwendet werden kann, bei der die Person eine erste Sprache spricht und die erste Sprache in eine zweite Sprache übersetzt wird, wobei die zweite Sprache bei einem Empfänger reproduziert wird, der den Eindruck erhält, daß die Person wirklich die zweite Sprache spricht.

10. Einrichtung nach einem der vorhergehenden Ansprüche, **dadurch gekennzeichnet, daß** die Reproduktion von Gesichtsausdrücken bei der Übersetzung von Sprache auf sich bewegende Bilder übertragen werden kann.

11. Einrichtung nach Anspruch 10, **dadurch gekennzeichnet, daß** die sich bewegenden Bilder sich auf Tiere, Menschen oder gezeichnete Figuren beziehen.

12. Einrichtung nach einem der vorhergehenden Ansprüche, **dadurch gekennzeichnet, daß** die Gesichtsausdrücke mit dazugehörigen Polyphonen bei Bildanimation, beispielsweise bei der Produktion von Animationsfilmen oder Zeichentrickfilmen verwendet werden können.

13. Einrichtung nach Anspruch 1, **dadurch gekennzeichnet, daß** Teile der Polyphone zusammen mit einem entsprechenden Bewegungsmuster im Gesicht gespeichert werden.

14. Einrichtung nach einem der vorhergehenden Ansprüche, **dadurch gekennzeichnet, daß** bei der Erzeugung von Wörtern und Sätzen diejenigen Teile der Polyphone an die erzeugten Wörter und Sätze angepaßt werden können, bei denen entsprechende sich bewegende Teile im Gesicht im entsprechenden Ausmaß modifiziert werden.

15. Einrichtung nach Anspruch 14, **dadurch gekennzeichnet, daß** das Bewegungsmuster in jedem aufgezeichneten Teil des Gesichts im Hinblick auf die Modifikation der Teile der Polyphone modifiziert wird.

16. Verfahren zur Sprachsynthese, wobei von einer Person in einer ersten Sprache gesprochene Sprache in eine zweite Sprache übersetzt wird, wobei Polyphone und ihre Teile, die in einer Speicherungseinheit gespeichert sind, ausgewählt und zu Wörtern und Sätzen kombiniert werden, **dadurch gekennzeichnet, daß** den Polyphonen entsprechende Gesichtsausdrücke des Sprechers zur selben Zeit wie die Polyphone aufgezeichnet und ebenfalls in der Speicherungseinheit gespeichert werden, daß bei der Erzeugung der Wörter und Sätze Polyphonen in der zweiten Sprache entsprechende gespeicherte Gesichtsausdrücke zu modellierten Gesichtsausdrücken kombiniert und auf die Reproduktion des Gesichts des Sprechers angewandt werden, wodurch das Gesicht ein Bewegungsmuster erhält, das dem Bewegungsmuster eines realen Gesichts gut entspricht.

17. Verfahren nach Anspruch 16, **dadurch gekennzeichnet, daß** eine Anzahl von Punkten in einem realen Gesicht zusammen mit den Polyphonen aufgezeichnet wird.

18. Verfahren nach Anspruch 16 oder 17, **dadurch gekennzeichnet, daß** bei der Aufzeichnung der Gesichtsausdrükke mehrere Meßpunkte im realen Gesicht zusammen mit den Polyphonen aufgezeichnet werden und beim Kombinieren der Polyphone die entsprechenden Gesichtsausdrücke für die Erzeugung des Modells verwendet werden.

## Revendications

1. Dispositif de synthèse de la parole, dans lequel le discours prononcé par une personne dans une première langue est traduit dans une seconde langue, dans lequel des polyphones et leurs parties stockés dans une unité de stockage sont sélectionnés et combinés en mots et en phrases, **caractérisé en ce que** les expressions faciales de l'orateur correspondant aux polyphones sont enregistrées en même temps que les polyphones et sont également stockées dans l'unité de stockage, et **en ce que** lors de la création des mots et des phrases, les expressions faciales stockées correspondant aux polyphones de la seconde langue sont combinées en expressions faciales modelées et appliquées à reproduire le visage de l'orateur, donnant ainsi au visage un ensemble de mouvements qui correspond bien à l'ensemble de mouvements d'un visage réel.

2. Dispositif selon la revendication 1, **caractérisé en ce qu'**un certain nombre de points dans le visage réel sont enregistrés en même temps que les polyphones.

3. Dispositif selon l'une quelconque des revendications précédentes, **caractérisé en ce que** lors de l'enregistrement des expressions faciales, un certain nombre de points de mesure dans les visages réels sont enregistrés avec les polyphones.

4. Dispositif selon l'une quelconque des revendications précédentes, **caractérisé en ce que** l'enregistrement des points image du visage réel est organisé pour être fait en trois dimensions.

5. Dispositif selon l'une quelconque des revendications précédentes, **caractérisé en ce que** l'ensemble de mouvements du visage est organisé pour être transféré à un modèle du visage en trois dimensions.

6. Dispositif selon la revendication 5, **caractérisé en ce que** le modèle du visage en trois dimensions consiste en une tête modèle.

7. Dispositif selon la revendication 6, **caractérisé en ce que** le visage réel est stocké avec/appliqué à la tête modèle, pour laquelle un modèle réaliste du visage réel est obtenu.

8. Dispositif selon l'une quelconque des revendications précédentes, **caractérisé en ce que** le visage réel avec les expressions faciales appartenant aux polyphones peut être reproduit en deux ou en trois dimensions.

9. Dispositif selon l'une quelconque des revendications précédentes, **caractérisé en ce que** la combinaison des polyphones et l'ensemble de mouvements du visage leur appartenant peuvent être utilisés lors d'une communication vidéo dans laquelle la personne parle dans une première langue, et ladite première langue est traduite dans une seconde langue, laquelle seconde langue est reproduite pour un destinataire à qui l'on donne l'impression que la personne parle vraiment la seconde langue.

10. Dispositif selon l'une quelconque des revendications précédentes, **caractérisé en ce que** la reproduction des expressions faciales peut être transférée à des images en mouvement lors de la traduction du discours.

11. Dispositif selon la revendication 10, **caractérisé en ce que** les images en mouvement se rapportent à des animaux, à des personnes ou à des formes dessinées.

12. Dispositif selon l'une quelconque des revendications précédentes, **caractérisé en ce que** les expressions faciales avec les polyphones leur appartenant peuvent être utilisés lors d'animation d'images, par exemple lors de la production de films animés.

13. Dispositif selon la revendication 1, **caractérisé en ce que** les parties des polyphones sont stockées avec l'ensemble correspondant de mouvements du visage.

14. Dispositif selon l'une quelconque des revendications précédentes, **caractérisé en ce que** lors de la création des mots et des phrases, les parties des polyphones peuvent être adaptées aux mots et phrases créés, et les parties du visage en mouvement correspondantes sont modifiées dans la même mesure.

15. Dispositif selon la revendication 14, **caractérisé en ce que** l'ensemble de mouvements dans chaque partie enregistrée du visage est modifié en rapport avec la modification des parties des polyphones.

16. Procédé de synthèse de la parole, dans lequel le discours prononcé par une personne dans une première langue est traduit dans une seconde langue, et dans lequel des polyphones et leurs parties stockés dans une unité de stockage sont sélectionnés et combinés en mots et en phrases, **caractérisée en ce que** les expressions faciales de l'orateur correspondant aux polyphones sont enregistrées en même temps que les polyphones et sont également stockées dans l'unité de stockage, et **en ce que** lors de la création des mots et des phrases, les expressions faciales stockées correspondant aux polyphones de la seconde langue sont combinées en expressions faciales modelées et appliquées à reproduire le visage de l'orateur, donnant ainsi au visage un ensemble de mouvements qui correspond bien à l'ensemble de mouvements d'un visage réel.

17. Procédé selon la revendication 16, **caractérisé en ce qu'**un certain nombre de points dans un visage réel sont enregistrés avec les polyphones.

18. Procédé selon la revendication 16 ou la revendication 17, **caractérisé en ce que** lors de l'enregistrement des expressions faciales, un certain nombre de points de mesure sont enregistrés dans le visage réel avec les polyphones, et lors de la combinaison des polyphones, les expressions faciales correspondantes sont utilisées pour la création du modèle.
